# EUROPÄISCHE PATENTSCHRIFT

(11) **EP 0 878 281 B1**
(45) Veröffentlichungstag und Bekanntmachung des Hinweises auf die Patenterteilung: **22.03.2006**
(21) Anmeldenummer: 98113741.7
(22) Anmeldetag: 22.09.1993
(51) Int. Cl.: B27K 3/34, B27K 3/50, A01N 43/653, A01N 25/02

(54) **Mikrobizide Mittel**
Microbicidal agents
Agents microbicides

(30) Priorität: 05.10.1992 DE 4233337
(43) Veröffentlichungstag der Anmeldung: 18.11.1998
(62) Teilanmeldung aus: 93115261.5
(73) Patentinhaber: LANXESS Deutschland GmbH, 51369 Leverkusen (DE)
(72) Erfinder: Heuer, Lutz, Dr., 51542 Dormagen (DE); Wachtler, Peter, Dr., 51061 Köln (DE); Schwamborn, Michael, Dr., 51069 Köln (DE); Kugler, Martin, Dr., 42799 Leichlingen (DE); Buschhaus, Hans-Ulrich, Dr., 47800 Krefeld (DE)

(56) Entgegenhaltungen:
- EP-A- 0 287 346
- EP-A- 0 484 279
- EP-A- 0 504 761
- EP-A- 0 531 837
- EP-A- 0 539 332
- EP-A- 0 554 833
- EP-A- 0 555 186
- EP-A- 0 556 157
- WO-A-94/05636
- DE-A- 3 406 993

## Beschreibung

Die Anmeldung betrifft die Verwendung einer Kombination enthaltend die Verbindung α-(4-Chlorphenyl-α-(1-cyclopropyl-ethyl)-1H-1,2,4-triazol-1-ethanol (Cyproconazole) und quaternäre Ammonium Verbindungen als Mikrobizid zum Schutz von technischen Materialien sowie mikrobizide Mittel enthaltend diese Verbindungen.

Es ist bekannt, daß die in der DE-OS 3 406 993 beschriebenen Azolderivale zum Schutz von Pflanzen verwendet werden können.

Gegenstand der vorliegenden Anmeldung ist die Verwendung einer Kombination enthaltend Cyproconazole der Formel (I) 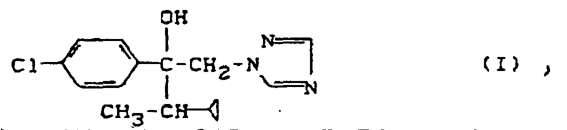 dessen Metallsalze oder Säureadditions Verbindungen und als Kombinationspartner Benzyldimethyltetradecylammoniumchlorid oder Benzyldimethyldodecylammoniumchlorid als Mikrobizid zum Schutz von technischen Materialien.

Das Azolderivat (I) kann nicht nur in Form der freien Base sondern auch in Form eines Metallsalz-Komplexes oder als Säureadditions-Salz vorliegen. Als Metallsalz Kommen vorzugsweise Salze von Metallen der II, bis IV. Hauptgruppe und der I, und II, sowie IV, bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe des Azolderivats können in einfacher Weise nach üblichen Verfahren erhalten werden, so z.B. durch Lösen des Metallsalzes in Alkohol, z.B. Ethanol und Hinzufügen zum Azolfungizid. Man kann Metallsalz-Komplexe in bekannter Weise, z.B. durch Abfiltrieren isolieren und gegebenenfalls durch Umkristallisieren reinigen.

Zur Herstellung von Säureadditionssalzen des Azolderivates Kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, 2-Ethylhexansäure, Buttersäure, Mandelsäure, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, p-Decyl-phenylsulfonsäure, p-Dodecyl-phenylsulfonsäure, 1,4,-Naphthalindisulfonsäure, Alkansulronsäuren, Benzoesäure und gegebenenfalls substituierte Benzoesäuren.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Besonders bevorzugt ist die Verwendung der Verbindung (R≠, R≠)-α-(4-Chlorphenyl)-α-(1-cyclopropylethyl)1H-1,2,4-trioazol-1-ethanol (Cyproconazole).

Überraschenderweise zeigen diese Kombinationen eine besonders hohe mikrobizide, insbesondere fungizide Wirkung, verbunden mit einem breiten Wirkspektrum gegen im Materialschutz relevante Mikroorganismen; sie sind vor allem wirksam gegen Schimmelpilze, holzverfärbende und holzzerstörende Pilze. Beispielhaft - ohne jedoch zu limitieren - seien die folgenden Gruppen von Mikroorganismen genannt:
A: Holzverfärbende Pilze:
   A1: Ascomyceten:
      Ceratocystis wie Ceratocystis minor
   A2: Deuteromyceten:
      Aspergillus wie Aspergillus niger
      Aureobasidium wie Aureobasidium pullulans
      Dactylium wie Dactylium fusarioides
      Penicillium wie Penicillium brevicaule oder
      Penicillium variabile
      Sclerophoma wie Sclerophoma pithyophila
      Scopularia wie Scopularia phycomyces
      Trichoderma wie Trichoderma viride oder
      Trichoderma lignorum
   A3: Zygomyceten:
      Mucor wie Mucor spinorus
B: Holzzerstörende Pilze:
   B1: Ascomyceten:
      Chaetomium wie Chaetomium globosum oder
      Chaetamium alba-arenulum
      Humicols wie Humicola grisea
      Petriella wie Petriella setifera
      Trichurus wie Trichurus spiralis
   B2: Basidiomyceten
      Coniophora wie Coniophora puteana
      Coriolus wie Coriolus versicolor
      Donkioporia wie Donkioporia expansa
      Glenospora wie Glenospora graphii
      Gloeophyllum wie Gloeophyllum abietinum oder
      Gloeophyllum adoratum oder Gl. protactum oder
      Gloeophyllum sepiarium oder Gl. trabeum
      Lentinus wie Lentinus cyathiformes oder
      Lentinus edodes oder Lentinus lepideus oder
      Lentinus grinus oder L. squarrolosus
      Paxillus wie Paxillus pandoides
      Pleurotus wie Pleurotis ostreatus
      Poria wie Poria monticola oder Poria placenta oder Poria vaillantii oder Poria vaporaria
      Serpula wie Serpula himantoides oder Serpula lacrymans
      Stereum wie Stereum hirsutum
      Tyromyces wie Tyromyces palustris
   B3: Deuteromyceten
      Alternaria wie Alternaria tenius
      Cladosporium wie Cladosporium herbarum

Die Menge des eingesetzten Wirkstoffes ist von der Art und dem Vorkommen der Mikroorganismen der Keimzahl und von dem Medium abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, des Wirkstoff, bezogen auf das zu schützende Material, einzusetzen.

Die Wirkstoffe können als solche, in Form von Konzentraten oder allgemein üblichen Formulierungen wie Pulver, granulate, Lösungen, Suspensionen, Emulsionen oder Pasten angewendet werden.

Die genannten Formulierungen können in an sich bekannter Weise hergestellt werden, z.B. durch Vermischen des Wirkstoffes mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Als Losungs- bzw. Verdünnungsmittel kommen organischchemische Lösungsmittel oder Lösungsmittelgemische und/oder ein polares organisches Lösungsmittel oder Lösungsmittelgemische und/oder ein öliges bzw. ölartiges organisch-chemisches Lösungsmittel oder Lösungsmittelgemisch und/oder Wasser mit gegebenenfalls einem Emulgator und/oder Netzmittel in Frage. Als übliche schwerflüchtige wasserunlösliche ölige oder ölartige Lösungsmittel werden vorzugsweise die jeweiligen Mineralöle/mineralölhaltige Lösungsmittelgemische oder deren Aromatenfraktionen verwendet. Vorzugsweise seien Testbenzin, Petroleum oder Alkylbenzole genannt, daneben Spindelöl und Monochlornaphthalin. Die Siedebereiche dieser schwerflüchtigen Lösemittel (gemische) überstreichen den Bereich von ca. 170°C bis maximal. 350°C.

Die vorbeschriebenen schwerflüchtigen öligen oder ölartigen Lösungsmittel können teilweise durch leichter flüchtige organisch-chemische Lösungsmittel ersetzt werden.

Zur Herstellung eines Holzschulzmittels wird vorzugsweise ein Teil des oben beschriebenen Lösungsmittels oder Lösungsmittelgemisches durch ein polares organisch-chemisches Lösungsmittel oder Lösungsmittelgemisch ersetzt. Vorzugsweise gelangen dabei Lösungsmittel, die Hydroxylgruppen, Estergruppen, Ethergruppen oder Gemische dieser Funktionalität enthalten, zum Einsatz. Beispielhaft seien Ester oder Glykolether genannt. Als Bindemittel werden erfindungsgemäß verstanden wasserverdünnbare bzw. in organisch-chemischen Lösungsmitteln lösliche, dispergier- oder emulgierbare Kunstharze, bindende trocknende Öle, z.B. auf Basis von Acrylharzen, Vinylharzen, Polyesterharzen, Polyurethanharzen, Alkydharzen, Phenolharzen, Kohlenwasserstoffharzen, Silikon harzen. Das benutzte Bindemittel Kann als Lösung, Emulsion oder Dispersion eingesetzt werden. Vorzugsweise werden Gemische aus Alkydharzen und trockendem pflanzlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % das Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt vorzugsweise Wasser in Frage, gegebenenfalls in Mischung mit einem oder mehreren der obengenannten Losungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch den Wirkstoff vor mikrobieller Veränderung oder Zerstörung geschützt werden sollen, Klebstoffe, Leime, Papiere und Karton, Textilien, Leder, Holz, Anstrichmittel und Kunststoffartikel, Kühlschmierstoffe und andere Materialien sein, die von Mikroorganismen befallen oder zersetzt werden Können. Im Rahmen der zu schützenden Materialien seien auch Teile von Produkttionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Holz, Holzwerkstoffe, Anstrichmittel, Kühlschmiermittel, wäßrige Hydraulikflüssigkeiten und Kühlkreisläufe.

Der Wirkstoff der Formel (I) bzw. diesen enthaltende Mittel bzw. Konzentrate werden vorzugsweise zum Schutz von Holz und Holzwerkstoffen gegen Mikroorganismen, z.B. gegen holzzerstörende oder holzverfärbende Pilze, insbesondere im tropischen Holzschutz eingesetzt.

Unter Holz, welches durch den Wirkstoff der Formel (I) bzw. diesen enthaltende Mischungen geschützt werden kann, ist beispielshaft zu verstehen: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Ein besonders effektiver Holzschutz wird durch großtechnische Imprägnierverfahren, z.B. Vakuum, Doppelvakuum oder Druckverfahren, erzielt.

Die erfindungsgemäß zu verwendende Kombination kann mit mindestens einem weiteren antimikrobiell wirksamen Stoff, Fungizid und insbesondere mit anderen Wirkstoffen zur Vergrößerung des Wirkspektrums oder Erzielung besonderer Effekte, wie z.B. dem zusätzlichen Schutz vor Insekten, gemischte werden. In vielen Fällen erhält man dabei synergistische Effekt, daß heißt, die Wirksamkeit der Mischung ist größer als die Wirksamkeit der Einzelkomponenten. Besonders bevorzugte Mischungspartner sind z.B. die folgenden Verbindungen:
Sulfenamide wie Dichlofluanid, Tolylfluanid, Folpet, Fluorfolpet;
Benzimiciazole wie Carbendazim, Benomyl, Fuberidazole, Thiabendazole oder deren Salze;
Thiocyanate wie Thiocyanatomethylthiobenzothiazol, Methylenbisthiocyanat;
quartäre Ammoniumverbindungen wie Didecyldimethylammoniumchlorid;
Morpholinderivate wie Tridemorph, Fenpropimorph, Falimorph;
Azole wie Triadimefon, Triadimenol, Bitertanol, Tebuconazole, Propiconazole, Azaconazole, Hexaconazole, Prochloraz, Bromuconazole, Metconazole, Penconazole, Difenoconazole, Fenbendazole, Opus, Fensilazole;
2-(1-Chlorcyclopropyl)-1-(2-chlorphenyl)-3-(1,2,-4-triazol-1-yl)-propan-2-ol;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbonat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat, O-1-(6-Iodo-3-oxo-hex-5-inyl) butylcarbamat, O-1-(6-Iodo-3-oxo-hex-5-inyl) phenylcarbamat, Napcocide;
Phenolderivate wie Tribromphenol, Tetrachlorphenol, 3-Methyl-4-chlorphenol, Dichlorophen, o-Phenylphenol, m-Phenylphenol, p-Phenylphenol, 2-Benzyl-4-chlorphenol;
Bromderivate wie 2-Brom-2-nitro-1,3-propandiol, 2-Brom-2-brommethyl-glutardinitril;
Isothiazolinone wie N-Methylisathiazolin-3-on, 5-Chloro-N-mathyl-isothiazolin-3-on, 4,5-Dichloro-N-octylisothiazolin-3-on, N-Octyl-isothiazolin-3-on,
Benzisothiazolinone wie 4,5-Trimethylen-N-methylisothiazol-3-on;
Pyridine wie 1-Hydroxy-2-pyridinthion (und ihre Na-, Fe-, Mn-, Zn-Salze), Tetrachlor-4-methylsulfonylpyridin;
Metallseifen wie Zinn-, Kupfer-, Zinknaphthenat, -octoat, -2-ethylhexanoat, -oleat, -phosphat, -benzoat;
Metallsalze und -oxide wie Tributylzinnoxid, Cu₂O, CuO, ZnO, CuSO₄, CuCl₂, Kupferborate, Kupferfluorsilikate, Natriumdichromat, Kaliumdichromat, Kupferhydroxycarbonat;
Dialkyldithiocarbamate wie Na- und Zn-Salze von Dialkyldithiocarbamaten, Tetramethylthiuramdisulfid:
Nitrile wie 2,4,5,6-Tetrachlorisophthalodinitril;
Benzthiazole wie Z-Mercaptobenzothiazol;
Chinoline wie 8-Hydroxychinolin und deren Cu-Salze;
Borverbindungen wie Borsäure, Borsäureester, Borax;
Formaldehyd und Formaldehydabspaltende Verbindungen wie Benzylalkoholmono(poly)-hemiformal, Oxazolidine, Hexahydro-S-triazine, N-Methylochloracetamid, Paraformaldehyd;
Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer.

Als Insektizide werden bevorzugt zugesetzt:
Phosphorsäureester wie Azinphos-ethyl, Azinphos-methyl, 1-(4-Chlorphenyl)-4-(O-ethyl, S-propyl)phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichloron;
Carbamate wie Aldicarb, Bendiocarb, 2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoxybenzylether wie Dimethyl(4-ethoxyphenyl)-silylmethyl-3-phenoxybenzylether oder (Dimethylphenyl)-silyl-methyl-2-phenoxy-6-pyridylmethylether wie z.B. Dimethyl(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethylsilan.
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclapropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-]N²⁻cyana-N¹-methylacetamid.

Die auf diese Weise hergestellten erfindungsgemäßen Mischungen, Konzentrate und Formulierungen zeigen Wirksamkeit nicht nur gegen die vorbenannten Pilze sondern auch gegen materialzerstörende Insekten, falls ein Insektizid zugegen ist. Beispielhaft - ohne zu limitieren - seien als materialzerstörende Insekten genannt:
A: Hautflügler;
   Sirex juvencus
   Uroterus augur
   Uroterus gigas
   Uruterus gigas taignus
B: Käfer:
   Anobium punctatum
   Apate monachus
   Bostrychus capucins
   Chlorophores pilosus
   Dendrobium pertinex
   Dinoderus minutus
   Ernobius mollis
   Heterobostrychus brunneus
   Hylotrupes bajulus
   Lyctus africanus
   Lyctus brunneus
   Lyctus linearis
   Lyctus planicollis
   Lyctus pubescens
   Minthea rugicollis
   Priobium carpini
   Ptilinus pecticornis
   Sinoxylon spec.
   Trogoxylon aequale
   Trypto dendron spec.
   Xestabium rofovillosum
   Xyleborus spec.
C: Termiten:
   Coptotermes formosanus
   Cryptotermes brevis
   Hoterotermes indicola
   Kalotermes flavicollis
   Mastotermes darwiniensis
   Reticulitermes flavipes
   Reticulitermes lucifugus
   Reticulitermes santonensis
   Zootermopsis nevadensis

Als andere Wirkstoffe kommen in Betracht Algizide, Molluskizide, Wirkstoffe gegen "sea animals", die sich auf z.B. Schiffsbodenanstrichen ansiedeln.

Besonders bevorzugt sind folgende Abmischpartner:
Dirchlofluanid, Tolylfluanid,
Benzyldimethyldodecylammoniumchlorid, Didecyldimethyammoniumchlorid,
Tebuconazole, Propiconazole, Azaconazole, Hexaconazole,
3-Brom-2,3-diiod-2-propenylalkohol, 3-(od-2-propinyl-n-butylcarbamat,
o-Phenylphenol, m-Phenylphenol, p-Phenylphenol, 3-Methyl-4-chlorphenol,
Thiocyanatomethylthiobenzothiazol,
N-Methylisothiazolin-3-on, 5-Chloro-N-methylisothiazolin-3-on, 4,5-Dichloro-N-octylisothiazolin-3-on, N-Octyl-isothiazolin-3-on,
Benzylalkoholmono (poly)-hemiformal, N-Methylolchloracetamid,
Phoxim,
Cyfluthrin, Permethrin, Cypermethrin, Deltamethrin, Imidacloprid.

Die zum Schutz der technischen Materialien verwendeten mikrobiziden Mittel oder Konzentrate enthalten den Wirkstoff der Formel (I) in einer Konzentration von 0,01 bis 95 Gew.-%, insbesondere 0,01 bis 60 Gew.-%, daneben gegebenenfalls 0,001 bis 95 Gew.-% eines oder mehrerer geeigneter weiterer Fungizide, Insektizicie oder weitere Wirkstoffe wie oben genannt.

Die erfindungsgemäßen Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites wirkungsspektrum.

## Patentansprüche

1. Verwendung einer Kombination enthaltend Cyproconazole der Formel (I) 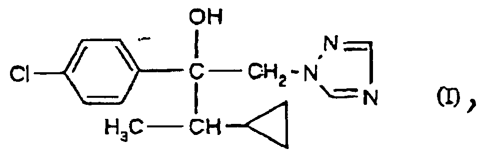 dessen Metallsalze oder Säureadditionsverbindungen,
und als Kombinationspartner Benzyldimethyltetradecylammoniumchlorid oder Benzyldimethyldodecylammoniumchlorid als Mikrobizid zum Schutz von technischen Materialien

2. Verwendung einer Kombination gemäß Anspruch 1 enthaltend als weitere Bestandteile mindestens ein Lösungs- oder Verdünnungsmittel, Emulgator, Dispergier- und/oder Binde- oder Fixiermittel und/oder Wasser-Repellent

3. Verwendung einer Kombination gemäß Ansprüchen 1 und 2 als Holzschutzmittel gegen im Holzschutz relevante Mikroorganismen.

4. Verfahren zum Schutz von technischen Materialien, **dadurch gekennzeichnet, dass** man die technischen Materialien mit einer Kombination enthaltend Cyproconazole der Formel (I) 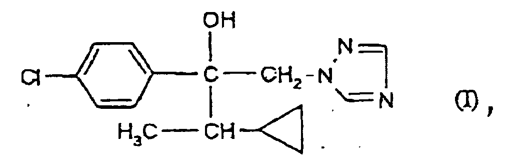 dessen Metallsalze oder Säureadditionsverbindungen,
und als Kombinationspartner Benzyldimethyltetradecylammoniumchlorid oder Benzyldimethyldodecylammoniumchlorid behandelt.

5. Verfahren gemäß Anspruch 4, **dadurch gekennzeichnet, dass** es sich bei den technischen Materialien um Holz handelt.

6. Mikrobizides Mittel enthaltend eine Kombination aus Cyproconazole des Formel (I) 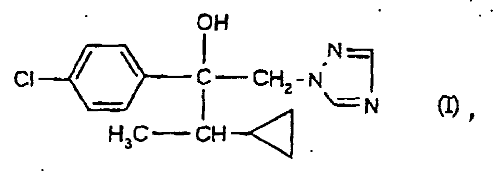 dessen Metallsalze oder Säureadditionsverbindungen,
und Benzyldimethyltetradecylammoniumchlorid oder Benzyldimethyldodecylammoniumchlorid.

7. Technische Materialien die mit einem Mittel gemäß Anspruch 6 behandelt werden.

## Claims

1. Use of a combination comprising cyproconazole, of the formula (I), 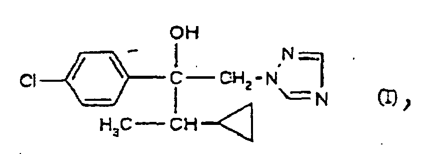 its metal salts or acid addition compounds, and, as component in combinations, benzyldimethyltetradecylammonium chloride or benzyldimethyldodecylammonium chloride as microbicide for the protection of industrial materials.

2. Use of a combination as set forth in Claim 1 comprising, as further components, at least one solvent, diluent, emulsifier, dispersant and/or binder or fixative and/or water repellent.

3. Use of a combination according to Claims 1 and 2 as timber preservative against microorganisms which are relevant in the protection of timber.

4. Method of protecting industrial materials, **characterized in that** the industrial materials are treated with a combination comprising cyproconazole, of the formula (I), 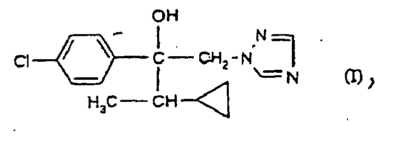 its metal salts or acid addition compounds, and, as component in combinations, benzyldimethyltetradecylammonium chloride or benzyldimethyldodecylammonium chloride.

5. Method according to Claim 4, **characterized in that** the industrial materials are timber.

6. Microbicidal composition comprising a combination of cyproconazole, of the formula (I), 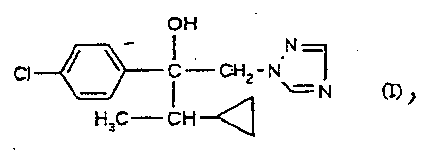 its metal salts or acid addition compounds, and benzyldimethyltetradecylammonium chloride or benzyldimethyldodecylammonium chloride.

7. Industrial materials which are treated with a composition according to Claim 6.

## Revendications

1. Utilisation d'une combinaison contenant du cyproconanzole de formule (I) 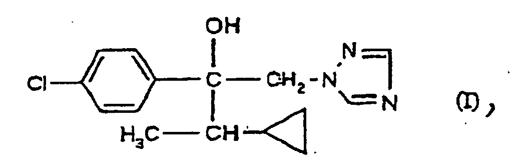 ses sels métalliques ou ses composés d'addition à un acide,
et en tant que partenaire de combinaison, du chlorure de benzyldiméthyltétradécylammonium ou du chlorure de benzyldiméthyldodécylammonium en tant que microbicide pour la protection de matières industrielles.

2. Utilisation d'une combinaison selon la revendication 1, contenant, en tant que constituants supplémentaires, au moins un solvant ou diluant, émulsifiant, agent dispersant et/ou liant ou fixateur et/ou agent hydrofuge.

3. Utilisation d'une combinaison selon les revendications 1 et 2 en tant que composition de protection du bois contre des micro-organismes importants dans la protection du bois.

4. Procédé de protection de matières industrielles, **caractérisé en ce que** les matières industrielles sont traitées avec une combinaison contenant du cyproconazole de formule (I) 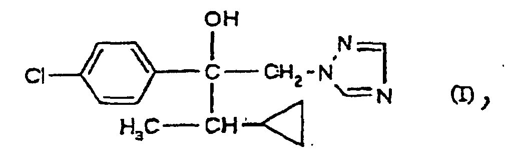 ses sels métalliques ou ses composés d'addition à un acide,
et en tant que partenaire de combinaison, du chlorure de benzyldiméthyltétradécylammonium ou du chlorure de benzyldiméthyldodécylammonium.

5. Procédé selon la revendication 4, **caractérisé en ce que** les matières industrielles sont le bois.

6. Composition microbicide contenant une combinaison de cyproconazole de formule (I) 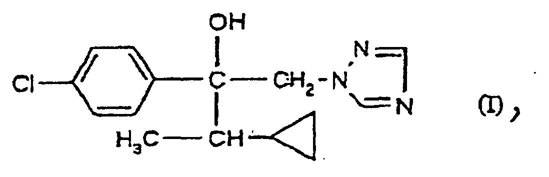 ses sels métalliques ou ses composés d'addition à un acide,
et du chlorure de benzyldiméthyltétradécylammonium ou du chlorure de benzyldiméthyldodécylammonium.

7. Matières industrielles qui sont traitées avec une composition selon la revendication 6.
